# EUROPÄISCHE PATENTSCHRIFT

(11) **EP 2 321 227 B1**
(45) Veröffentlichungstag und Bekanntmachung des Hinweises auf die Patenterteilung: **25.04.2012**
(21) Anmeldenummer: 09777519.1
(22) Anmeldetag: 29.07.2009
(51) Int. Cl.: C02F 1/44, C02F 3/12, E03B 1/04

(54) **GRAUWASSERNUTZUNGSANLAGE MIT BELÜFTERSTEUERUNG**
GRAY WATER UTILIZATION SYSTEM HAVING AERATOR CONTROL
INSTALLATION D'UTILISATION D'EAU GRISE AVEC COMMANDE D'AÉRATEUR

(30) Priorität: 04.09.2008 DE 102008045686
(43) Veröffentlichungstag der Anmeldung: 18.05.2011
(73) Patentinhaber: Spinflow GmbH, 51570 Windeck (DE)
(72) Erfinder: EHLERT, Ulrich, 51570 Windeck (DE)
(74) Vertreter: Lenzing Gerber Stute
(86) Internationale Anmeldenummer: PCT/EP2009/005493
(87) Internationale Veröffentlichungsnummer: WO 2010/025797

(56) Entgegenhaltungen:
- WO-A-97/30233
- DE-A1- 19 807 890
- DE-A1-102004 019 962
- US-A1- 2004 108 268
- US-B1- 7 396 453

## Beschreibung

Die vorliegende Erfindung betrifft Grauwassernutzungsanlagen mit einem Grauwasserbehälter, einem Klarwasserbehälter, einem Membranfilter und einer Luftpumpe sowie mit wenigstens einer ersten Luftleitung von der Luftpumpe zu dem Membranfilter, wobei der Membranfilter ein Filtergehäuse aufweist, das eine Grauwasserseite und eine Klarwasserseite umfasst und wobei eine Verbindungsleitung zwischen der Klarwasserseite des Filtergehäuses und dem Klarwasserbehälter zum Transport von Klarwasser aus dem Filtergehäuse in den Klarwasserbehälter angeordnet ist. Die eingesetzten Membranfilter können dabei plattenförmig, folienartig oder auch röhrenförmig ausgebildet sein.

Als Grauwasser wird das im Haushalt anfallende Dusch- und Badewasser bezeichnet, das nicht mit Fäkalien belastet ist: Grauwasser kann durch geeignete Filtration derart aufbereitet werden, dass es im Haushalt anstelle von Trinkwasser für bestimmte Zwecke verwendet werden kann. Das Filtrat wird als Klarwasser bezeichnet. Es ist hygienisch einwandfrei. Mögliche Einsatzzwecke sind die Gartenbewässerung, die Toilettenspülung und die Nutzung zum Wäschewaschen.

Bei bekannten Anlagen, beispielsweise aus der Offenlegungschrift DE 19807 890A1 oder aus dem Prospekt "Weise Water Systems GmbH: MiroClear - Getauchte Ultrafiltration für kostbares Wasser, Seite 1 bis 12", fließt das Grauwasser in eine Klärvorrichtung, die zwei Kammern aufweist. In einer Kammer wird das Grauwasser zwischengespeichert, in der anderen Kammer wird das Klarwasser gesammelt. In der Grauwasserkammer ist ein Filtersatz angeordnet, der aus Membranfiltern aufgebaut ist, der mittels einer Luftpumpe belüftet ist, und dessen Grauwasserseite mit dem Grauwasserbehälter in Verbindung steht, während die Klarwasser- oder Filtratseite über eine Rohrleitung mit der Filtratkammer verbunden ist. Der Übertritt von Klarwasser aus dem Membranfilter in das Klarwasserbehältnis erfolgt auf Grund der Druckdifferenz, die sich aus der Differenz der Füllstände in der Grauwasserkammer und der Klarwasserkammer ergibt. Zwangsläufig kann deshalb der Wasserstand in der Klarwasserkammer nur maximal bis zum Füllstand der Grauwasserkammer ansteigen. Die Folge ist, dass bei niedrigem Grauwasserstand auch der Klarwasserstand niedrig bleibt. Die Grauwassermenge, die als Vorlage ansteht, wird erst dann filtriert, wenn wieder Klarwasser entnommen worden ist. Der zur Verfügung stehende Puffer an Klarwasser ist deshalb durch die Menge des anstehenden Grauwassers begrenzt.

Aufgabe der vorliegenden Erfindung ist es deshalb, eine Grauwassernutzungsanlage mit möglichst geringem Aufwand dahingehend zu verbessern, dass vorliegendes Grauwasser bereits zu Klarwasser filtriert werden kann, auch wenn das Grauwasserniveau in der Behälteranordnung nicht über dem Klarwasserniveau liegt.

Diese Aufgabe wird von einer Vorrichtung mit den Merkmalen des Anspruchs 1 gelöst.

Weil eine von einer Steuerung ansteuerbare Ventilanordnung zwischen der Luftpumpe, der ersten Luftleitung und einer zweiten Luftleitung vorgesehen ist, die in einer ersten Stellung die Druckseite der Luftpumpe mit der ersten Luftleitung verbindet und die in einer zweiten Schaltstellung die Druckseite der Luftpumpe mit der zweiten Luftleitung verbindet, so dass in der zweiten Stellung ein Druck auf der Klarwasserseite des Filtergehäuses erzeugbar ist, kann dieser Druck genutzt werden, um das Klarwasser aus dem Filtergehäuse in den Klarwasserbehälter zu heben.

Wenn weiter die Ventilmittel wenigstens ein 3/2-Wege-Magnetventil zwischen der Luftpumpe und der zweiten Luftleitung umfassen, kann dieses Ventil in der ersten Schaltstellung zur Verbindung des Filtergehäuses mit der Atmosphäre und in der zweiten Schaltstellung zur Einleitung von Druckluft in das Filtergehäuse genutzt werden.

Weiter ist es vorteilhaft, wenn die Verbindungsleitung zwischen dem in dem Grauwasserbehälter angeordneten Filtergehäuse und dem Klarwasserbehälter eine Steigleitung ist, in vertikaler Richtung bis auf die Höhe eines Überlaufs des Grauwasserbehälters geführt ist, weil dann auf eine hermetisch dichte Durchführung durch die Trennwand zwischen dem Grauwasserbehälter und dem Klarwasserbehälter unterhalb des Grauwasserspiegels verzichtet werden kann. Die Anlage kann auch mit zwei separaten Tanks ausgeführt werden, die im Erdreich oder auch im Haus angeordnet sein können. Durch die erfindungsgemäße Anlagengestaltung ist es dann möglich, für den Klarwasserbehälter ein besonders großes nutzbares Volumen zu erzielen.

Es kann weiter vorteilhaft sein, auf der Klarwasserseite des Filtergehäuses zwischen einem unmittelbar an die Membranen angrenzenden Volumen und einem mit der Verbindungsleitung verbundenen Volumen einen Kanal vorzusehen, der ein Rückschlagventil zur Vermeidung einer Druckbeaufschlagung der Membran während des Entnahmevorgangs enthält. Auf diese Weise wird eine Druckbelastung der Membran verhindert. Andererseits kann bei bestimmten Betriebsbedingungen ein Vorteil dadurch erzielt werden, dass der während des Entnahmevorgangs auf die Membranen wirkende Druck ein Rückspülen der Membranen bewirkt. Nachfolgend wird ein Ausführungsbeispiel der Erfindung anhand der Zeichnung näher beschrieben.

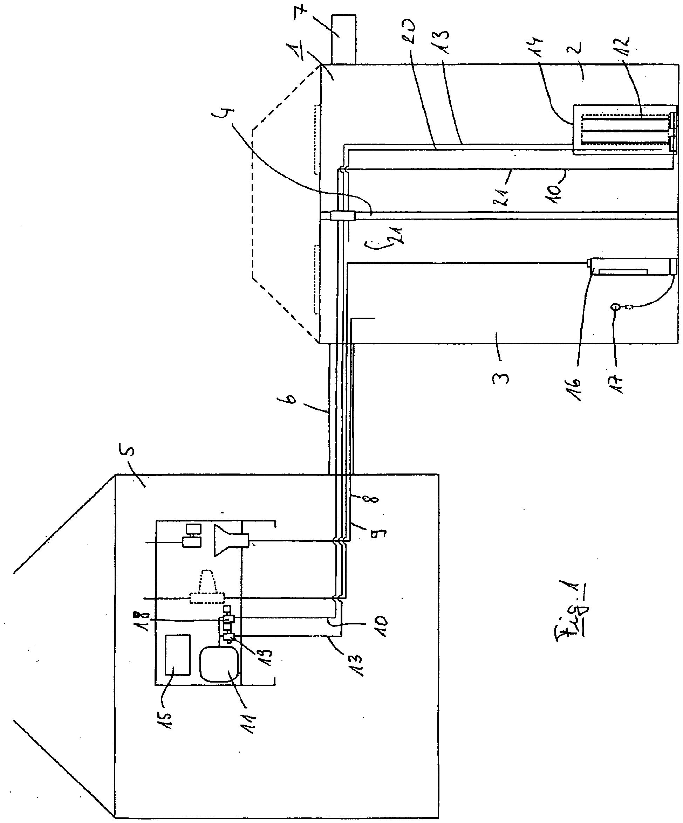

Die Fig. 1 zeigt schematisch eine Grauwasseraufbereitungsanlage mit einem Behälter 1, der eine Grauwasserkammer 2 und eine Klarwasserkammer 3 umfasst. Die beiden Kammern sind durch eine Trennwand 4 voneinander getrennt. Der Behälter 1 ist außerhalb eines Wohngebäudes 5 angeordnet, beispielsweise unterhalb des Erdniveaus. Ein Leitungskanal 6 führt weiter unten näher beschriebene Verbindungsleitungen von dem Wohngebäude zu dem Behälter. Ein Überlauf 7 führt überschüssiges Grauwasser an die Kanalisation ab.

Die innerhalb des Kanals 6 verlaufenden Leitungen umfassen eine Trinkwassernachspeiseleitung 8, eine Klarwasserleitung 9, die von dem Klarwasserbehälter 3 in das Wohngebäude 5 führt, eine erste Luftleitung 10 von einer Luftpumpe 11 zu einem Belüfter 22 eines Membranfiltersatz 12, sowie eine zweite Luftleitung 13, die in ein Gehäuse 14 des Membranfiltersatzes 12 führt. Die Einleitung von Grauwasser in den Grauwasserbehälter 2 erfolgt über eine nicht dargestellte Abflussleitung durch den Kanal 6.

Weiter sind elektrische Verbindungen zwischen einer Steuerung 15 und der Luftpumpe 11 sowie zu anderen elektrischen Aggregaten vorgesehen, die nicht im Detail dargestellt sind. Für die Förderung von Klarwasser aus dem Klarwasserbehälter 3 durch die Klarwasserdruckleitung 9 in das Wohngebäude 5 ist eine Tauchpumpe 16 in den Klarwasserbehälter 3 angeordnet. Die Tauchpumpe 16 wird beispielsweise über eine integrierte Pumpensteuerung gesteuert und entnimmt Klarwasser über eine schwimmende Entnahmevorrichtung 17. Sie baut den erforderlichen Wasserdruck zur Entnahme im Wohngebäude in der Klarwasserleitung 9 auf.

Die Luftpumpe 11 baut im Betrieb einen Luftstrom auf, der mit einem Überdruck an einem ersten Magnetventil 18 und einem zweiten, parallel geschalteten Magnetventil 19 ansteht. Im geöffneten Zustand speist das erste Magnetventil 18 den Luftstrom in die erste Luftleitung 10 zur Speisung des Belüfters 22 ein, während das zweite Magnetventil 19 im geöffneten Zustand in die zweite Luftleitung 13 einspeist. Die beiden Magnetventile 18 und 19 werden von der Steuerung 15 angesteuert. Das Ventil 18 kann ein 2/2-Wege-Magnetventil sein, während das Ventil 19 vorzugsweise ein 3/2-Wege-Magnetventil ist, um alternativ die Belüftung und den atmosphärischen Druckausgleich der Klarwasserseite des Filtergehäuses zu ermöglichen.

Im Betrieb läuft Grauwasser aus dem Wohngebäude 5 in den Grauwasserbehälter 2 und steht dort an der Grauwasserseite des Membranfiltersatzes 12 an. Die Luftpumpe 11 wird von der Steuerung 15 in Betrieb gesetzt und fördert über das geöffnete erste Magnetventil 18 durch die erste Luftleitung 10 einen Luftstrom über den Belüfter 22 an die Unterseite des Membranfiltersatzes 12. Luftblasen perlen dann an der Grauwasserseite der Membran 12 entlang und reinigen die Membran kontinuierlich. Auch die aerobe Biologie wird hierdurch mit Sauerstoff versorgt. Das zweite Magnetventil 19 ist hierbei zur Druckseite der Luftpumpe 15 hin geschlossen. Es verbindet die zweite Luftleitung 13 mit der Atmosphäre. Grauwasser tritt von der Grauwasserseite des Membranfiltersatzes 12 her durch die Membranen hindurch in die im gleichen Gehäuse 14 angeordnete Klarwasserseite des Filtersatzes. Die Klarwasserseite ist bis auf den Membranfiltersatz 12 hermetisch gegenüber der Grauwasserseite geschlossen. Membranfiltersätze dieser Art sind aus dem Stand der Technik bekannt. Die über den Belüfter 22 unterhalb des Membranfiltersatzes 12 zugeführte Luft entweicht auf der Grauwasserseite des Membranfiltersatzes 12 durch die Grauwasserkammer 2 zur Atmosphäre hin. Auf Grund des zunächst vorhandenen Höhenunterschieds zwischen dem Grauwasserspiegel in dem Grauwasserbehälter 2 und der zunächst leeren Klarwasserseite in dem Filtergehäuse 14 wird Wasser durch den Membranfiltersatz 12 gedrängt und das Klarwasserniveau innerhalb des Filtergehäuses 14 steigt an. Dieses Ansteigen des Klarwasserniveaus während des Filtervorgangs auf Grund der Druckdifferenz erfolgt nur so lange, bis das Niveau der beiden Flüssigkeiten ausgeglichen ist.

Um nun das Klarwasser aus dem Filtergehäuse 14 zu befördern, wird das Magnetventil 18 von der Steuerung 15 geschlossen. Die Luftpumpe 11 arbeitet weiter. Das Magnetventil 19 wird von der Steuerung 15 geöffnet, so dass der Luftstrom in die zweite Luftleitung 13 eingespeist wird. Diese Luftleitung endet in dem Filtergehäuse 14 auf der Klarwasserseite. Es baut sich auf der Klarwasserseite in dem Gehäuse 14 ein Druck auf, der das Klarwasser über eine Steigleitung 20 anhebt und über den freien Auslauf 21 in den Klarwasserbehälter 3 befördert. Ist der Klarwasservorrat in dem Filtergehäuse 14 soweit entleert, dass die zweite Luftleitung 13 frei ausbläst, so wird dies von der Steuerung 15 festgestellt, beispielsweise anhand des in der zweiten Luftleitung 13 anstehenden Drucks oder eines Füllstandssensors. Das Magnetventil 19 wird dann wieder geschlossen und das Magnetventil 18 geöffnet, so dass der Luftstrom der Luftpumpe 16 wieder zur Reinigung des Membranfiltersatzes 12 zur Verfügung steht. Der nunmehr neu geschaffene Druckunterschied zwischen dem anstehenden Grauwasser und der Klarwasserseite im Filtergehäuse 14 bewirkt, dass die Filtration weiter erfolgt.

Die Steuerung kann auch über den Füllstand der Klarwasserseite oder als getaktete Zeitsteuerung erfolgen.

Das Klarwasser in dem Klarwasserbehälter 3 steht dann zur Entnahme durch die Tauchpumpe 16 bereit. Auf diese weise kann durch die insoweit beschriebene Anordnung Klarwasser aus dem Filtergehäuse 14 in den Klarwasserbehälter 3 gefördert werden, auch bis zu einem Niveau, dass deutlich oberhalb des Grauwasserspiegel in dem Grauwasserbehälter 2 liegt. Hierfür sind im einfachsten Fall nur die beiden dargestellten Magnetventile 18 und 19 sowie die zweite Luftleitung 13 erforderlich. Auf eine separate Hebepumpe zur Förderung des Klarwassers in den Klarwasserbehälter 3 kann verzichtet werden. Es handelt sich deshalb um eine einfache und preisgünstige Ausgestaltung einer Grauwassernutzungsanlage, die die Verfügbarkeit von Klarwasser erhöht.

In einer erweiterten Ausführungsform kann die Leitung 13 während des Filtrationsvorgang in bekannter Weise mit einer Vakuumpumpe verbunden sein, um durch den entstehenden Unterdruck die Filtration zu beschleunigen.

Die in der Zeichnung dargestellte Anordnung von Luftpumpe, Steuerung, Trinkwassernachspeisung und Magnetventilen kann auch in einer besonders kompakten Ausführungsform in einem Modul in dem Klarwasserbehälter angeordnet sein. Das Modul wird dann so angebracht, dass es stets oberhalb des Wasserspiegels ist. Die Hebepumpe 16 arbeitet dann in einer erweiterten Steuerung auch als Sicherheitspumpe, die bei Erreichen eines Maximalfüllstandes im Klarwasserbehälter einen Teil des Klarwassers abpumpt, beispielsweise zurück in den Grauwasserbehälter. Die in dem Modul notwendigen Bauelemente können besonders gut gegen Korrosion geschützt werden, weil der Klarwasserbehälter und der Grauwasserbehälter nicht wie bisher atmosphärisch miteinander verbunden sind, so dass korrosive Gase aus der biologischen Grauwasseraufbereitung nicht in den Bereich des Moduls gelangen können. Die so ausgestaltete Anlage kann dann in besonders einfacher Weise vormontiert angeliefert werden. Der Montageaufwand beschränkt sich auf die Aufstellung und das Anschließen von Strom, Trinkwasser sowie Grauwasserzulauf und Klarwasserdruckleitung.

### Bezugszeichenliste

- 1.: Behälter
- 2.: Grauwasserkammer
- 3.: Klarwasserkammer
- 4: Trennwand
- 5.: Wohngebäude
- 6.: Leitungskanal
- 7.: Überlauf
- 8.: Trinkwassereinspeiseleitung
- 9.: Klarwasserleitung
- 10.: Luftleitung
- 11.: Luftpumpe
- 12.: Membranfiltersatz
- 13.: Luftleitung
- 14.: Gehäuse
- 15.: Steuerung
- 16.: Tauchpumpe
- 17.: Entnahmevorrichtung
- 18.: Magnetventil
- 19.: Magnetventil
- 20.: Steigleitung
- 21.: Auslauf
- 22.: Belüfter

## Patentansprüche

1. Grauwassernutzungsanlage mit einem Grauwasserbehälter (2), einem Klarwasserbehälter (3), einem Membranfilter (12) und einer Luftpumpe(11) sowie mit wenigstens einer ersten Luftleitung (10) von der Luftpumpe (11) zu dem Membranfilter (12), wobei der Membranfilter (12) ein Filtergehäuse (14) aufweist, das eine Grauwasserseite und eine Klarwasserseite umfasst und wobei eine Verbindungsleitung (20) zwischen der Klarwasserseite des Filtergehäuses (14) und dem Klarwasserbehälter (3) zum Transport von Klarwasser aus dem Filtergehäuse (11) in den Klarwasserbehälter (3) angeordnet ist, **dadurch gekennzeichnet, dass** eine von einer Steuerung (15) ansteuerbare Ventilanordnung (18, 19) zwischen der Luftpumpe (11), der ersten Luftleitung und einer zweiten Luftleitung (13) vorgesehen ist, die in einer ersten Stellung die Druckseite der Luftpumpe (11) mit der erste Luftleitung (10) verbindet und die in einer zweiten Schaltstellung die Druckseite der Luftpumpe (11) mit der zweiten Luftleitung (13) verbindet, so dass in der zweiten Stellung ein Druck auf der Klarwasserseite des Filtergehäuses (14) erzeugbar ist.

2. Grauwassernutzungsanlage nach Anspruch 1, **dadurch gekennzeichnet, dass** die Klarwasserseite des Filtergehäuses (14) in der ersten Schaltstellung der Ventilanordnung (18, 19) mit der Atmosphäre verbunden ist.

3. Grauwassernutzungsanlage nach einem der vorhergehenden Ansprüche, **dadurch gekennzeichnet, dass** die Ventilanordnung (18, 19) wenigstens ein 3/2-Wege-Magnetventil zwischen der Luftpumpe und der zweiten Luftleitung umfasst.

4. Grauwassernutzungsanlage nach einem der vorhergehenden Ansprüche, **dadurch gekennzeichnet, dass** die Klarwasserseite des Filtergehäuses (14) in der ersten Schaltstellung der Ventilanordnung (18, 19) über die Ventilanordnung mit der Atmosphäre verbunden ist.

5. Grauwassernutzungsanlage nach einem der vorhergehenden Ansprüche, **dadurch gekennzeichnet, dass** die Verbindungsleitung zwischen dem Grauwasserbehälter (2) und dem Klarwasserbehälter (3) eine Steigleitung (20) ist, in vertikaler Richtung bis auf die Höhe eines Überlaufs (7) des Grauwasserbehälters (2) geführt ist.

6. Grauwassernutzungsanlage nach einem der vorhergehenden Ansprüche, **dadurch gekennzeichnet, dass** auf der Klarwasserseite des Filtergehäuses (14) zwischen einem unmittelbar an die Membranen angrenzenden Volumen und einem mit der Verbindungsleitung (20) verbundenen Volumen ein Kanal vorgesehen ist, der ein Rückschlagventil zur Vermeidung einer Druckbeaufschlagung der Membran während des Entnahmevorgangs enthält.

## Claims

1. Grey water utilisation system comprising a grey water tank (2), a clear water tank (3), a membrane filter (12) and an air pump (11) as well as at least one first airline (10) from the air pump (11) to the membrane filter (12), the membrane filter (12) having a filter housing (14) which comprises a grey water side and a clear water side, and wherein a connection line (20) is arranged between the clear water side of the filter housing (14) and the clear water tank (3) for transporting clear water from the filter housing (14) into the clear water tank (3), **characterised in that** a valve arrangement (18, 19) controllable by a controller (15) is provided between the air pump (11), the first airline and a second airline (13), which valve arrangement connects, in a first position, the pressure side of the air pump (11) to the first airline and connects, in a second switching position, the pressure side of the air pump (11) to the second airline, so that, in the second position, a pressure can be generated on the clear water side of the filter housing (14).

2. Grey water utilisation system according to claim 1, **characterised in that** the clear water side of the filter housing (14) is connected to the atmosphere in the first switching position of the valve arrangement (18, 19).

3. Grey water utilisation system according to any one of the preceding claims, **characterised in that** the valve arrangement (18, 19) comprises at least one 3/2 way solenoid valve between the air pump and the second airline.

4. Grey water utilisation system according to any one of the preceding claims, **characterised in that** the clear water side of the filter housing (14) is connected, in the first switching position of the valve arrangement (18, 19), via the valve arrangement to the atmosphere.

5. Grey water utilisation system according to any one of the preceding claims, **characterised in that** the connection line between the grey water tank (2) and the clear water tank (3) is a riser pipe (20), which is guided in a vertical direction up to the level of an overflow of the grey water tank (2).

6. Grey water utilisation system according to any one of the preceding claims, **characterised in that**, on the clear water side of the filter housing (14), a channel is provided between a volume directly adjacent to the membranes and a volume connected to the connection line (20), which channel contains a non-return valve in order to avoid any application of pressure on the membrane during the removal process.

## Revendications

1. Installation d'exploitation d'eau grise, comportant un réservoir d'eau grise (2), un réservoir d'eau claire (3), un filtre à membrane (12) et une pompe à air (11), ainsi qu'au moins une première conduite d'air (10) allant de la pompe à air (11) au filtre à membrane (12), ledit filtre à membrane (12) étant pourvu d'un carter de filtre (14) présentant un côté eau grise et un côté eau claire, et où une conduite de connexion (20) est disposée entre le côté eau claire du carter de filtre (14) et le réservoir d'eau claire (3) pour le refoulement de l'eau claire du carter de filtre (14) vers le réservoir d'eau claire (3), **caractérisée en ce qu'**un ensemble de vannes (18, 19) actionnable par une commande (15) est prévu entre la pompe à air (11), la première conduite d'air et une deuxième conduite d'air (13), lequel relie le côté refoulement de la pompe à air (11) à la première conduite d'air (10) dans une première position, et le côté refoulement de la pompe à air (11) à la deuxième conduite d'air (13) dans une deuxième position de commutation, si bien qu'une pression peut être générée sur le côté eau claire du carter de filtre (14) dans la deuxième position.

2. Installation d'exploitation d'eau grise selon la revendication 1, **caractérisée en ce que** le côté eau claire du carter de filtre (14) est relié à l'atmosphère en première position de commutation de l'ensemble de vannes (18, 19).

3. Installation d'exploitation d'eau grise selon l'une des revendications précédentes, **caractérisée en ce que** l'ensemble de vannes (18, 19) comprend au moins une vanne 3/2 voies entre la pompe à air et la deuxième conduite d'air.

4. Installation d'exploitation d'eau grise selon l'une des revendications précédentes, **caractérisée en ce que** le côté eau claire du carter de filtre (14) est relié à l'atmosphère par l'ensemble de vannes en première position de commutation de l'ensemble de vannes (18, 19).

5. Installation d'exploitation d'eau grise selon l'une des revendications précédentes, **caractérisée en ce que** la conduite de connexion entre le réservoir d'eau grise (2) et le réservoir d'eau claire (3) est une colonne montante (20) dirigée verticalement jusqu'au niveau d'un trop-plein (7) du réservoir d'eau grise (2).

6. Installation d'exploitation d'eau grise selon l'une des revendications précédentes, **caractérisée en ce qu'**un canal est prévu côté eau claire du carter de filtre (14), entre un volume immédiatement adjacent aux membranes et un volume relié à la conduite de connexion (20), lequel contient une vanne anti-retour pour éviter que la membrane soit soumise à la pression pendant le soutirage.
